# EUROPÄISCHE PATENTSCHRIFT

(11) **EP 2 835 540 B1**
(45) Veröffentlichungstag und Bekanntmachung des Hinweises auf die Patenterteilung: **27.04.2016**
(21) Anmeldenummer: 13179710.2
(22) Anmeldetag: 08.08.2013
(51) Int. Cl.: F15B 11/028, B25B 27/10, F15B 13/042

(54) **Hydraulikantrieb**
Hydraulic drive
Entraînement hydraulique

(43) Veröffentlichungstag der Anmeldung: 11.02.2015
(73) Patentinhaber: HAWE Hydraulik SE, 81673 München (DE)
(72) Erfinder: Aneder, Georg, 82275 Emmering (DE); Zwingler, Engelbert, 85625 Baiern/Antholing (DE)
(74) Vertreter: Grünecker Patent- und Rechtsanwälte PartG mbB

(56) Entgegenhaltungen:
- EP-A1- 0 944 937
- EP-A1- 2 448 720
- DE-A1-102006 026 552

## Beschreibung

Die Erfindung betrifft einen Hydraulikantrieb der im Oberbegriff des Patentanspruches 1 angegebenen Art.

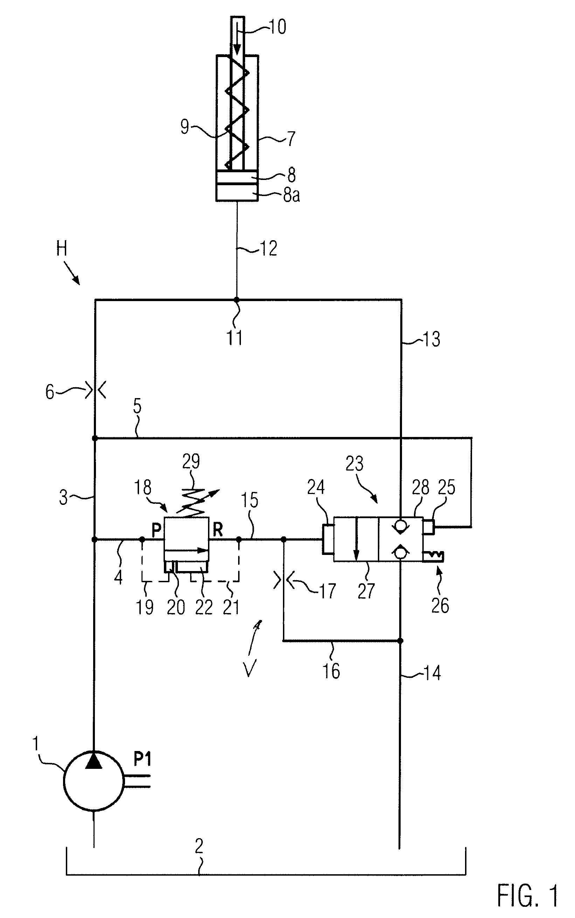

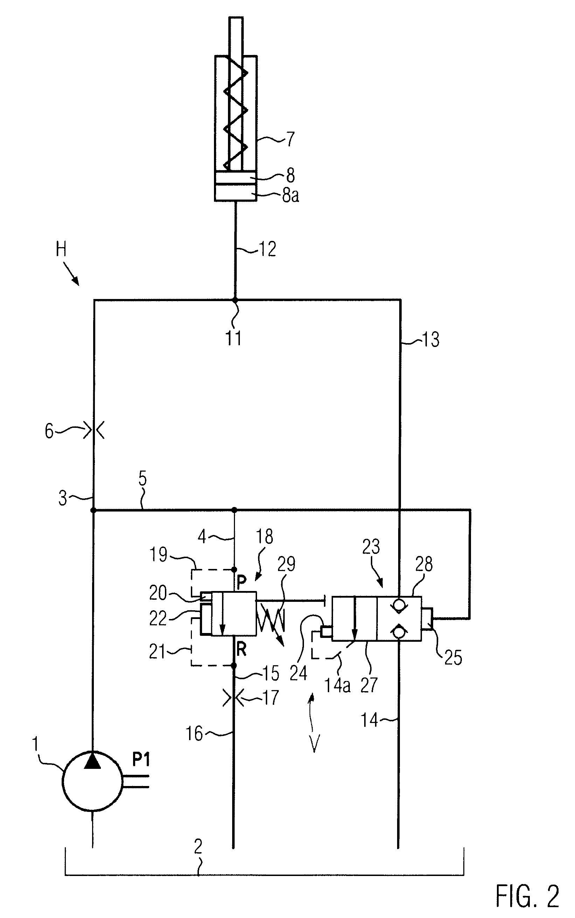

Bei dem gattungsgemäßen, aus EP 2 448 720 A1 bekannten Hydraulikantrieb wird nach Ansprechen des Druckbegrenzungs-Sitzventils und sobald auch die größere Druckbeaufschlagungsfläche des Ventilkolbens druckbeaufschlagt ist, schlagartig ein großer Querschnitt zum Tank freigegeben, über den beim zumindest in etwa gleichzeitigen Abschalten der Pumpe (Fig. 1, 2) ein kräftiger Volumenstrom über einen großen Querschnitt in den Tank schießt und der Druck an der von einem Ventilkegel-Abschnitt des Umschalt-Sitzventils gebildeten Drossel schnell zusammenbricht. Daraufhin nimmt das Druckbegrenzungs-Sitzventil umgehend wieder seine Absperrstellung ein. Am Ventilkegel des Umschalt-Sitzventils entsteht an der Aufsteuerseite eine Kraft, die das Umschalt-Sitzventil aufsteuert und die Arbeitskammer über eine die Rückhubgeschwindigkeit des Kolbens begrenzende Düse mit dem Tank verbindet. Falls gewünscht, wird durch neuerliches Einschalten der Pumpe über einen Volumenstromimpuls der Rückhub des Kolbens an wählbarer Rückhubposition gestoppt und das Umschalt-Sitzventil zugesteuert. Selbst wenn der elektrische Antriebsmotor der Pumpe beispielsweise durch Polumschaltung so schnell wie möglich abgeschaltet wird, ist dennoch ein Nachlauf der Pumpe unvermeidbar, der einen Volumenstrom-Impuls in der Druckleitung erzeugt, auf den zwar das schon geschlossene Druckbegrenzungs-Sitzventil nicht mehr anspricht, jedoch das Umschalt-Sitzventil ansprechen kann. Durch das Zusammenspiel zwischen dem schlagartig zum Tank ansprechenden Druckbegrenzungs-Sitzventil und dem Umschalt-Sitzventil ist nämlich in den Hydraulikantrieb eine zeitliche Logik implementiert, die nicht eindeutig definiert ist und unter ungünstigen Betriebsverhältnissen durch den Nachlauf-Volumenstrom überlistet werden kann, wodurch das Umschalt-Sitzventil ungewollt zugesteuert oder nicht aufgesteuert wird und der Kolben seine Rückhub entweder gar nicht aufnimmt oder frühzeitig abbricht. Von dieser zeitlichen Logik ist nämlich der Volumenstromimpuls beim gewollten Einschalten der Pumpe, z.B. zwecks Abstoppens des Rückhubs nicht eindeutig von dem Nachlauf-Volumenstromimpuls zu unterscheiden.

DE 10 2006 026 552 A1 betrifft einen ähnlichen Hydraulikantrieb.

Von Interesse ist auch ein Hydraulikantrieb gemäß EP 0 944 937 A1, in welchem ein einziges Rücklaufventil die Aufgaben der Begrenzung des maximalen Arbeitsdrucks und des Umschaltens auf den Rückhub des Kolbens übernimmt, der jedoch seinen Rückhub bis in eine Endstellung ausführt, die durch die am Kolben permanent wirkende Last bestimmt ist, wobei der Rückhub durch erneutes Einschalten der Pumpe nicht an wählbarer Rückhubposition abstoppbar ist. Der Erfindung liegt die Aufgabe zugrunde, einen abstoppbaren Hydraulikantrieb der eingangs genannten Art trotz eines unvermeidbaren Nachlauf-Volumenstromimpulses der Pumpe funktionssicherer auszubilden bzw. eine funktionssichere Ventilanordnung bereitzustellen.

Die gestellte Aufgabe wird mit den Merkmalen des Patentanspruches 1 gelöst.

Da das Umschalt-Sitzventil an der Aufsteuerseite bei Ansprechen und beim Offenhalten des Druckbegrenzungs-Sitzventils entweder vom angehobenen Druck an dessen Abströmseite hydraulisch oder mechanisch aufgesteuert wird, wobei das Druckbegrenzungs-Sitzventil wegen der Druckanhebung sozusagen verzögert anspricht und der Druck nicht schlagartig vom Druckbegrenzungs-Sitzventil in den Tank verschwindet, ist konstruktiv eine Logik in den Hydraulikantrieb implementiert, die von einem Nachlauf-Volumenstromimpuls der Pumpe nicht überlistet wird, weil die an der Aufsteuerseite wirkende Kraft so groß und noch vorhanden ist, wenn ein Nachlauf-Volumenstromimpuls an der Zusteuerseite des Umschalt-Sitzventils einen Druckimpuls erzeugen sollte. Es ist zu vermuten, dass wegen der Druckanhebung über die Drosselanordnung das Druckbegrenzungs-Sitzventil in jedem Fall auch bei Abschalten der Pumpe und/oder solange ein Volumenstrom fließt, seine offene Stellung hält, bis das Umschalt-Sitzventil ordnungsgemäß aufgesteuert ist, selbst wenn ein Nachlauf-Volumenstromimpuls auftreten sollte, dessen Auswirkung auch über das noch offene Druckbegrenzungs-Sitzventil gemildert wird. Auf diese Weise ist die Funktionssicherheit des Hydraulikantriebs signifikant verbessert. Die konstruktiv implementierte Logik vermag überraschend zwischen dem Nachlauf-Volumenstromimpuls der Pumpe und einem bewusst z.B. zum Abstoppen des Rückhubs des Kolbens erzeugten Volumenstromimpuls durch vorübergehendes Einschalten der Pumpe zu unterscheiden, so dass das Umschalt-Sitzventil erst zugesteuert wird, wenn dies tatsächlich gewünscht ist. Das Druckbegrenzungs-Sitzventil bleibt sozusagen unabhängig davon offen, wie lange die Pumpe nach dem Öffnen nachläuft. Die Motorsteuerung muss nicht extrem präzise schalten. Es ist sogar denkbar, ohne Motorsteuerung auszukommen und den Motor nur mit einem Ein- und Ausschalter manuell zu bedienen.

In der Ventilanordnung bleibt das Druckbegrenzungs-Sitzventil nach dem Ansprechen offen, solange in der Druckleitung ein Volumenstrom fließt, und wird das Umschalt-Sitzventil zuverlässig aufgesteuert und aufgesteuert gehalten, unabhängig davon, ob der Volumenstrom absichtlich bis zum Ansprechen des Druckbegrenzungs-Sitzventils erzeugt wird oder von einem unvermeidlichen Nachlauf einer im Abschaltbetrieb betreibbaren, die Druckleitung speisenden Pumpe stammt. Dies führt zu höherer Betriebssicherheit, weil ausgeschlossen ist, dass das Umschalt-Sitzventil wegen Nachlaufens der Pumpe entweder nicht korrekt aufgesteuert oder umgehend wieder zugesteuert wird. Zweckmäßig wird die Ventilanordnung beispielsweise für Hydraulikantriebe von Werkzeugen verwendet, bei denen das Druckbegrenzungs-Sitzventil einen maximalen Arbeitsdruck begrenzt, und die Pumpe in etwa mit Ansprechen des Druckbegrenzungs-Sitzventils abgeschaltet wird, wobei das Umschalt-Sitzventil dann den Hydroverbraucher zum Tank entlastet und dessen Rückhub einleitet. Andere Einsatzfälle sind jedoch für die Ventilanordnung auch denkbar.

Dabei ist es wichtig, wenn das Druckbegrenzungs-Sitzventil nur vom aus einem Volumenstrom in der Druckleitung stromauf der Drossel erzeugten angehobenen Druck entsperrt und offengehalten wird, und nicht durch Druckmittel, das aus der Arbeitskammer des Kolbens abströmt. Dies ermöglicht auch einen raschen und nur durch den Drosselwiderstand über das Umschalt-Sitzventil und in der Ablassleitung gebremsten Rückhub des Kolbens.

Dank der konstruktiv implementierten, fehlersicheren Logik kann der Kolben innerhalb des Rückhubs an jeder gewünschten Rückhubposition abgestoppt werden, indem die Pumpe zeitlich begrenzt eingeschaltet wird.

Alternativ kann der Kolben an jeder gewünschten Rückhubposition durch erneutes Einschalten und Laufenlassen der Pumpe in seiner Bewegungsrichtung umgesteuert werden. Sowohl das Abstoppen als auch die Richtungsumkehr sind wichtige Anforderungen an den Hydraulikantrieb, um zwischen Arbeitstakten des Werkzeugs nicht die Zeitdauer des gesamten Rückhubs abwarten zu müssen und keine unzweckmäßigen Volumenströme zirkulieren zu lassen.

Baulich einfach ist die Drosselanordnung zur Druckanhebung entweder von einer in einer von der Abströmseite des Druckbegrenzungs-Sitzventils zum Tank geführten Tankleitung angeordneten Drosselstelle und/oder von der Tankleitung selbst oder im Druckbegrenzungs-Sitzventil an geeigneter Stelle gebildet, z.B. zwischen dem großdurchmessrigen Teil des Ventilkolbens und einer benachbarten Kammerwand.

Bei einer zweckmäßigen Ausführungsform, bei der die Kraft an der Aufsteuerseite hydraulisch erzeugt wird, sind das Druckbegrenzungs-Sitzventil und das Umschalt-Sitzventil baulich voneinander getrennt, vorzugsweise als Einschraubventile ausgebildet, und hydraulisch über eine Signalleitung verbunden, die sich von der Abströmseite des Druckbegrenzungs-Sitzventils zur Zusteuerseite in einer einen Ventilkolben enthaltenen Kammer des Umschalt-Sitzventils erstreckt. Das Umschalt-Sitzventil wird so nicht durch Druckabfall an der Zuströmseite des Druckbegrenzungs-Sitzventils aufgesteuert, sondern durch den das Ansprechen des Druckbegrenzungs-Sitzventils verzögernd angehobenen Druck, der auf eine entsprechend große Druckbeaufschlagungsfläche im Umschalt-Sitzventil gebracht wird, die eine hohe und vom Druck an der Zusteuerseite, selbst bei einem Nachlauf-Volumenstrom, nicht zu überwindende Kraft erzeugt.

Zur Sicherheit, d.h., um ein unkontrolliertes Zusteuern des Umschalt-Sitzventils flankierend zu verhindern, kann dieses eine mechanische Rastvorrichtung aufweisen, mit der es in der jeweiligen Schaltstellung mechanisch verrastet wird. Die Kraft der Rastvorrichtung ist so groß, dass sie durch einen Druckimpuls an der Zusteuerseite aufgrund eines Nachlauf-Volumenstromimpulses nicht überwunden wird und nicht bei Auftreten von über die Drossel zurückwirkendem Staudruck, oder bei einer strömungsdynamischen Sogwirkung im Umschalt-Sitzventil.

Alternativ oder additiv kann das Umschalt-Sitzventil an der Aufsteuerseite zusätzlich mit Tankdruck beaufschlagt werden, um das Umschalt-Sitzventil zuverlässig auch dann aufgesteuert zu halten, wenn das Druckbegrenzungs-Sitzventil wieder in der Absperrstellung ist.

Im Übrigen ist es zweckmäßig, das Umschalt-Sitzventil federfrei auszubilden, was seinen Aufbau und seine Funktion vereinfacht. Dies schließt jedoch nicht aus, zumindest eine schwache Feder vorzusehen, die beispielsweise an der Aufsteuerseite wirkt.

Bei einer zweckmäßigen Ausführungsform mit hydraulischer Aufsteuerung des Umschalt-Sitzventils weist dieses in einem mit dem Tank verbundenen Raum einen mit einem im Gehäuse verschiebbaren Ventilkolben verbundenen Schließkegel auf, der mit einem zur Arbeitskammer offenen Sitz zusammenarbeitet, und ist der Ventilkolben in einer an die Druckleitung angeschlossenen Ringkammer im Gehäuse mit einer kreisringförmigen Druckbeaufschlagungsfläche als Zusteuerseite versehen, die nur einem Bruchteil einer größeren Druckbeaufschlagungsfläche des Ventilkolbens an der Aufsteuerseite in einer mit der Signalleitung verbundenen Kammer entspricht. Über die größere Druckbeaufschlagungsfläche an der Aufsteuerseite wird vom angehobenen Druck an der Abströmseite des Druckbegrenzungs-Sitzventils ausreichend lange eine ausreichend hohe Kraft erzeugt, die das Umschalt-Sitzventil zuverlässig aufsteuert und aufgesteuert hält.

In einer zweckmäßigen Ausführungsform umfasst die Verrastung wenigstens eine radial einwärts nachgiebig, vorzugsweise durch einen O-Ring, belastete Kugel in einer Radialbohrung des Gehäuses des Umschalt-Sitzventils, und den zugesteuerten und aufgesteuerten Stellungen des Ventilkolbens entsprechende Rastvertiefungen im Umfang des Ventilkolbens. Die Rastvertiefungen sind, vorzugsweise, angrenzend an die größere Beaufschlagungsfläche des Ventilkolbens angeordnet, d.h. auf einem optimal großen Durchmesser. Alternativ oder additiv könnte an der Aufsteuerseite auch der Tankdruck auf einer kleineren Druckbeaufschlagungsfläche als die größere Druckbeaufschlagungsfläche wirken, beispielsweise über ein Wechselventil, auf welches der angehobene Druck und der Tankdruck wechselseitig aufgebracht werden, und das den jeweils höheren Druck in die Kammer und auf den Ventilkolben überträgt.

Bei einer anderen günstigen Ausführungsform, bei der die Kraft an der Aufsteuerseite mechanisch erzeugt wird, sind das Umschalt-Sitzventil und das Druckbegrenzungs-Sitzventil in einem gemeinsamen Gehäuse angeordnet. Das Gehäuse ist über eine Leitung an die Arbeitskammer angeschlossen, über zwei parallele Druckleitungszweige an die Pumpe, und eine Tankleitung an den Tank. Im Gehäuse ist an einer der kleineren Druckbeaufschlagungsfläche abgewandten, mit dem Tank verbundenen Seite des die größere Druckbeaufschlagungsfläche aufweisenden Ventilkolbens des Druckbegrenzungs-Sitzventils als Ventilkolben des Umschalt-Sitzventils ein hohler, vorzugsweise die Drossel enthaltender, Stufenkolben mit außenseitiger Sitzfläche verschiebbar geführt, der mit einer im Gehäuse zwischen einem Tankanschluss und einem Druckleitungsanschluss sowie einem Anschluss der Leitung zur Arbeitskammer geformten Sitz zusammenwirkt. Der Stufenkolben wird bei eingeschalteter Pumpe vom Druck in der Druckleitung am Sitz gehalten, bis das Druckbegrenzungs-Sitzventil anspricht, wobei die Druckleitung gleichzeitig mit der Arbeitskammer verbunden ist. Bei Ansprechen des Druckbegrenzungs-Sitzventils und offengehaltenem Druckbegrenzungs-Sitzventil betätigt dessen die größere der Druckbeaufschlagungsfläche aufweisender Ventilkolben den Stufenkolben mechanisch, der vom Sitz abhebt und bei gegebenenfalls dann bereits abgeschalteter Pumpe die Arbeitskammer über den offenen Sitz mit dem Tank verbindet. Das Umschalt-Sitzventil kann auch in diesere Ausführung eine mechanische Verrastung aufweisen.

Zweckmäßig ist der zum Umschalt-Sitzventil führende Druckleitungszweig an eine dem Ventilkolben des Druckbegrenzungs-Sitzventils abgewandte Federkammer angeschlossen und mit dem zur Arbeitskammer führenden Leitungsanschluss jenseits des Sitzes über wenigstens einen den Stufenkolben axial durchsetzenden, vorzugsweise die Drossel enthaltenden, Kanal verbunden. Auf diese Weise wird auch der das Umschalt-Sitzventil bzw. dessen Stufenkolben an der Zusteuerseite beaufschlagende Druck der Druckleitung stromauf der Drossel abgegriffen.

Baulich einfach kann die Drosselanordnung zur Druckanhebung im Druckbegrenzungs-Sitzventil bei der größeren Druckbeaufschlagungsfläche zwischen dem Außenumfang des Ventilkolbens und einer Wand einer den Kolben verschiebbar enthaltenden Kammer gebildet sein, die an einer Seite des Kolbens bei Ansprechen des Druckbegrenzungs-Sitzventils mit dem Druck in der Druckleitung beaufschlagbar ist, und an der gegenüberliegenden Seite des Kolbens, mit der dieser den Stufenkolben zum Aufsteuern des Umschalt-Sitzventils verschiebt, mit dem Tank verbunden ist. In dieser Kammer wird auch der Stufenkolben an der Aufsteuerseite des Umschalt-Sitzventils mit dem Tankdruck beaufschlagt. Beim Ansprechen des Druckbegrenzungs-Sitzventils strömt Druckmittel nicht schlagartig zum Tank, sondern über die Drosselanordnung verzögert, wodurch das Druckbegrenzungs-Sitzventil offengehalten bleibt, solange in der Druckleitung ein Volumenstrom fließt.

Anhand der Zeichnungen werden Ausführungsformen des Erfindungsgegenstandes erläutert. Es zeigen:
- Fig. 1: ein Blockschaltbild einer ersten Ausführungsform einer Hydrauliksteuerung,
- Fig. 2: ein Blockschaltbild einer weiteren Ausführungsform einer Hydrauliksteuerung,
- Fig. 3: ein Blockschaltbild mit Axialschnittdarstellungen der ersten Ausführungsform, in drucklosem Zustand, und
- Fig. 4: ein Blockschaltbild mit Axialschnittdarstellungen der weiteren Ausführungsform der Fig. 2 in drucklosem Zustand.

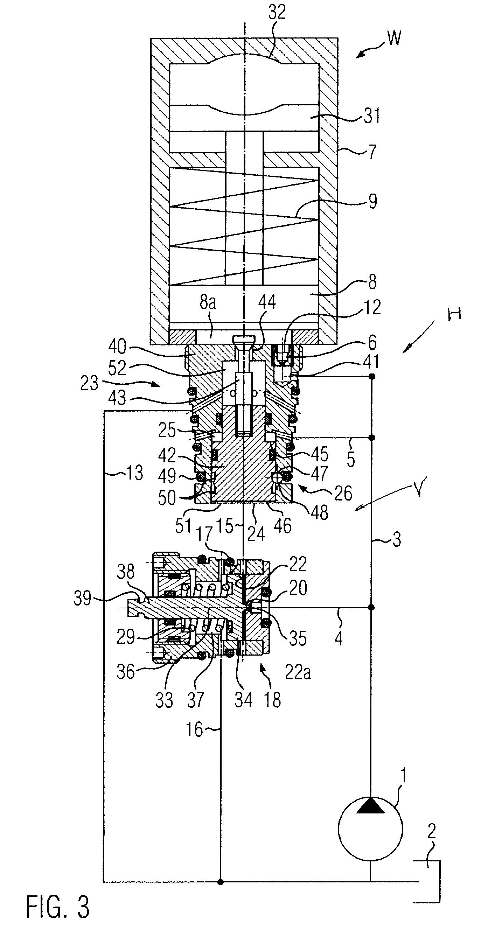

Fig. 1 und 3 illustrieren als Blockschaltbild in Fig. 1 und als Blockschaltbild mit Axialschnitten in Fig. 3 eine Ausführungsform eines Hydraulikantriebes H, der beispielsweise in Werkzeugen W (Fig. 3) eingesetzt wird, mit denen beispielsweise Fittings in der Sanitärtechnik verpresst werden. Bei einem solchen Arbeitseinsatz ist es wichtig, dass eine vorbestimmte maximale Arbeitskraft bei jedem korrekten Arbeitszyklus aufgebracht, mit Erreichen der maximalen Arbeitskraft das Werkzeug bzw. dessen Antrieb abgeschaltet, und in etwa gleichzeitig ein Rückhub begonnen wird, der entweder vollständig durchfahren oder an beliebiger Rückhubposition gestoppt oder dort durch einen neuen Arbeitsvorgang fortgesetzt wird.

Der Hydraulikantrieb in Fig. 1 weist eine beispielsweise durch einen nicht gezeigten Elektromotor im Abschaltbetrieb betreibbare Pumpe 1 auf, die aus einem Tank 2 ansaugt und in eine Druckleitung 3 fördert. Von der Druckleitung 3 zweigen Druckleitungszweige 4, 5 ab und ist stromab des Druckleitungszweiges 5 eine Drossel 6 vorgesehen. Die Druckleitung 3 führt stromab der Drossel 6 zu einem Knoten 11, von dem eine Leitung 12 in eine Arbeitskammer 8a eines Hydroverbrauchers 7, beispielsweise eines Hydraulikzylinders, führt, in welcher ein Kolben 8 gegen eine permanente Last (entweder Feder 9 und/oder Last 10) einseitig beaufschlagbar ist, der gemäß Fig. 3 beispielsweise einen Werkzeugteil 31 des Werkzeugs W relativ zu einem festen Werkzeugteil 32 verstellt.

Vom Knoten 11 führt auch eine Ablassteitung 13 zu einer Tankleitung 14. Der Druckleitungszweig 4 führt zu einem Druckbegrenzungs-Sitzventil 18, von dem abströmseitig eine Signalleitung 15 zu einem Umschalt-Sitzventil 23 führt, das zwischen der Ablassleitung 13 und der Tankleitung 14 angeordnet ist, beispielsweise ein zumindest druckvorgesteuertes 2/2-Wegesitzventil. Von der Signalleitung 15 zweigt eine Tankleitung 16 hier zur Tankleitung 14 ab, die eine Drosselanordnung 17 enthält oder als Drosselanordnung ausgebildet ist. Die Drosselanordnung 17 könnte, wie später erläutert wird, auch im Druckbegrenzungs-Sitzventil 18 baulich untergebracht sein.

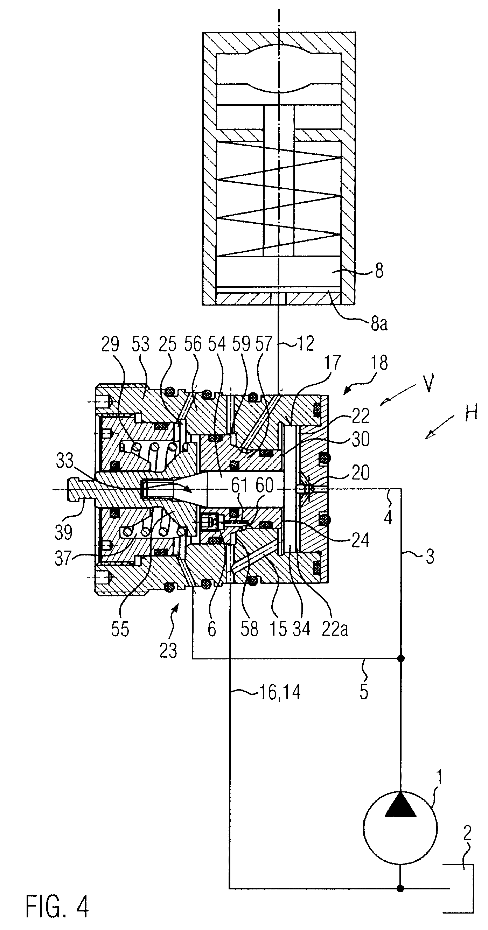

Von dem Druckleitungszweig 4 zweigt eine Steuerleitung 19 zu einer kleineren Druckbeaufschlagungsfläche 20 des Druckbegrenzungs-Sitzventils 18 ab, während von der Signalleitung 15 eine Steuerleitung 21 zu einer wesentlich größeren Druckbeaufschlagungsfläche 22 des mit einer einstellbaren Feder 29 belasteten Druckbegrenzungs-Sitzventils führt. Das Umschalt-Sitzventil 23 weist eine Aufsteuerseite 24 auf, an die die Signalleitung 15 angeschlossen ist und die eine wesentlich größere Druckbeaufschlagungsfläche aufweist als eine Zusteuerseite 25 des Umschalt-Sitzventils 23, zu welcher der Druckleitungszweig 5 führt. Das Umschalt-Sitzventil 23 ist zwischen einer zugesteuerten Stellung 28 und einer aufgesteuerten Stellung 27 druckabhängig umschaltbar, ist, vorzugsweise, federfrei ausgelegt, und weist in der Ausführungsform in den Fig. 1 und 3 als Option eine mechanische Verrastung 26 auf, die die zugesteuerte und die aufgesteuerte Stellung jeweils mechanisch festhält. Als nicht gezeigte Alternative könnte additiv oder alternativ zur mechanischen Verrastung 26 an der Aufsteuerseite 24 auf einer relativ kleinen Druckbeaufschlagungsfläche der Druck in der Tankleitung 14 als Haltedruck wirken, ähnlich wie bei der Ausführungsform in den Fig. 3 und 4.

In der konkret gezeigten Ausführungsform in Fig. 3, die dem symbolischen Blockschaltbild der Fig. 1 entspricht, wird die Pumpe 1 mit oder nach Erreichen der maximalen Arbeitskraft, d.h. Ansprechen des Druckbegrenzungs-Sitzventils 18, eingestellt beispielsweise an der Feder 29, über eine nicht dargestellte Steuerung abgeschaltet, und, bei Bedarf, beispielsweise mittels eines Handschalters zum Abstoppen des Rückhubs des Kolbens 8 an beliebiger Rückhubposition nur kurzzeitig beispielsweise mittels des Handschalters eingeschaltet, oder zur Richtungsumkehr des Kolbens 8 an jeder Rückhubposition erneut eingeschaltet.

Das Druckbegrenzungs-Sitzventil 18 weist die kleinere Druckbeaufschlagungsfläche 20 an einem Zapfenfortsatz eines Ventilgliedes 33 in Form eines großdurchmessrigen Kolbens 34 mit einem Schaft 38 und einer Handnotbetätigungs-Angriffsstelle 39 auf, das durch die Feder 29 in Schließrichtung mit dem Zapfenfortsatz in eine kleine Bohrung 35 gepresst wird, an die der Druckleitungszweig 4 angeschlossen ist. Das Ventilschließglied 33 ist in einem Gehäuse 36 verschieblich geführt, wobei der Kolben 34 mit seinem Außenumfang und der Innenwand des Gehäuses 36 die Drosselanordnung 17 bildet, die zwischen einer Kammer 22a und einer Federkammer 37 wirksam ist. In der Kammer 22a befindet sich die größere Druckbeaufschlagungsfläche 22 des Kolbens 34. Ferner ist die Kammer 22a über die Signalleitung 15 mit einer Kammer 51 in einem Gehäuse 40 des Umschalt-Sitzventils 23 verbunden. In dieser Kammer wird die größere, beispielsweise von einer Kreisfläche 46 am Ende eines Ventilkolbens 42 definierte Druckbeaufschlagungsfläche 24 mit dem Druck in der Signalleitung 15 beaufschlagt. Die Federkammer 37 des Druckbegrenzungs-Sitzventils 18 steht mit der Tankleitung 16 in Verbindung. Das Gehäuse 36 ist in eine nicht gezeigte Gehäusebohrung eingeschraubt, d.h., das Druckbegrenzungs-Sitzventil 18 ist wie auch das Umschalt-Sitzventil 23 zweckmäßig jeweils als Einschraubventil ausgebildet und verbaut. Alternativ (nicht gezeigt) könnten diese Ventile mit ihren Komponenten in einem Block untergebracht sein.

Das Umschalt-Sitzventil 23 ist in dieser Ausführungsform optional direkt an dem Boden des Hydroverbrauchers 7 verbaut und enthält im Gehäuse 40 in einem mit der Tankleitung 13 verbundenen Raum 52 einen mit dem Ventilkolben 52 verbundenen Ventilkegel 43, der mit einem zur Arbeitskammer 8a offenen Sitz 44 zusammenwirkt. Der Ventilkolben 42 ist ein Stufenkolben, der auf seiner kleineren Druckbeaufschlagungsfläche im Raum 52 mit dem Druck in der Tankleitung 13 in Schließrichtung beaufschlagt ist, und dort die Zusteuerseite 25 als kreisringförmige Druckbeaufschlagungsfläche 45 aufweist, die über den Druckleitungszweig 5 mit dem Druck in der Druckleitung 3 beaufschlagbar ist.

Die anhand Fig. 1 erläuterte mechanische Verrastung 26 umfasst wenigstens eine in einer Radialbohrung 48 des Gehäuses 40 bewegliche Kugel 47, die beispielsweise durch einen O-Ring 49 nachgiebig einwärts beaufschlagt wird und mit im Umfang des Ventilkolbens 42 geformten Rastvertiefungen 50 zusammenwirkt, um den Ventilkolben 42 in der zugesteuerten und der aufgesteuerten Position des Umschalt-Sitzventils 23 mechanisch festzulegen. Sollte additiv oder alternativ an der Aufsteuerseite 24 auch der Druck in der Tankleitung 13 in Aufsteuerrichtung wirken (wie in Fig. 2), könnte eine nicht gezeigte Verbindungsleitung aus dem Raum 52 wie auch die Signalleitung 15 zu einem Wechselventil führen, dessen Zentralanschluss die Kammer 51 im Gehäuse 40 beaufschlagt, wobei das Wechselventil den jeweils höheren Druck in die Kammer 51 überträgt, oder kann die Tankleitung 13 über eine zusätzliche Drossel an die Kammer 51 angeschlossen werden.

Im Gehäuse 40 ist ferner in der Ausführungsform in Fig. 3 in der in die Arbeitskammer 8a mündenden Leitung 13 die Drossel 6, beispielsweise in Form eines eingeschraubten Drosseleinsatzes, untergebracht, wobei im Gehäuse 40 ein Anschluss 41 gebohrt ist.

### Funktion der Ausführungsform der Fig. 1 und 3:

Fig. 3 verdeutlicht den drucklosen Zustand bei abgeschalteter Pumpe 1. Wird die Pumpe 1 eingeschaltet, dann strömt Druckmittel durch die Drossel 6 in die Arbeitskammer 8a und der Kolben 8 beginnt seinen Arbeitshub nach oben. In der Drossel 6 entsteht eine Druckdifferenz, so dass über den Druckleitungszweig 5 auf der Zusteuerseite 25 ein höherer Druck wirkt als in der Arbeitskammer 8a. Das Umschalt-Sitzventil 23 wird zunächst in der gezeigten Sperrstellung am Sitz 44 gehalten, und gegebenenfalls ohne eingegliederte Feder. Das Druckbegrenzungs-Sitzventil 18 verharrt zunächst in der gezeigten Stellung, bis das Werkzeug W einen Arbeitszyklus ausgeführt hat und der maximale Arbeitsdruck in der Druckleitung 3 aufgrund zunehmendem Bewegungswiderstands des Kolbens 8 erreicht wird, der auf die kleinere Druckbeaufschlagungsfläche 20 wirkt. Das Schließglied 33 wird gegen die Kraft der Feder 29 aus der Bohrung 35 gehoben, so dass der maximale Arbeitsdruck schlagartig auf die wesentlich größere Druckbeaufschlagungsfläche 24 am Kolben 34 wirkt und der Zapfenfortsatz mit der kleineren Druckbeaufschlagungsfläche 20 vollständig aus der Bohrung 35 herausgehoben ist. Gleichzeitig wird der maximale Arbeitsdruck aus der Kammer 22a über die Signalleitung 15 in die Kammer 51 und dort auf die Aufsteuerseite 24 des Ventilkolbens 42 übertragen, so dass das Umschalt-Sitzventil 23 voll öffnet und die Arbeitskammer 8a mit der Tankleitung 13 verbindet. Der Kolben 8 beginnt unter der Kraft der Feder 9 oder einer Last 10 seinen Rückhub. Aufgrund der Drosselanordnung 17 im Druckbegrenzungs-Sitzventil 18 baut sich der maximale Arbeitsdruck verzögert in die Federkammer 37 und von dieser über die Tankleitung 16 zum Tank ab. Die hydraulisch an der Aufsteuerseite 24 generierte Kraft aus dem angehobenen Druck in der Signalleitung 15 hat die wesentlich schwächere Kraft auf der Zusteuerseite 25 bereits überwunden, die mit dem Druckabbau in der Druckleitung 3 ohnedies weitestgehend verschwindet. Das Umschalt-Sitzventil 23 wird zuverlässig voll aufgesteuert und offengehalten. Beim Aufsteuern springt die wenigstens eine Kugel 47 in die der aufgesteuerten Stellung entsprechende Rastvertiefung 50 und hält den Ventilkegel 43 entfernt vom Sitz 44. Sobald sich dann der maximale Arbeitsdruck über die Drosselanordnung 17 so weit zum Tank 2 abgebaut hat, dass die Kraft der Feder 29 wieder überwiegt, nimmt das Druckbegrenzungs-Sitzventil 18 wieder seine gezeigte Absperrstellung ein, während das Umschalt-Sitzventil 23 aufgesteuert bleibt und der Kolben 18 den Rückhub fortsetzt. Wird der Rückhub bis zur Endstellung durchfahren, ist nach wie vor das Umschalt-Sitzventil 23 in der aufgesteuerten Stellung. Soll der Rückhub des Kolbens 8 an gewählter Rückhubposition gestoppt werden, wird die Pumpe 1 für eine vorbestimmte Zeitdauer eingeschaltet, um einen Volumenstromimpuls zu generieren, der ohne das Druckbegrenzungs-Sitzventil 18 zum Ansprechen zu bringen, dank der Druckdifferenz über die Drossel 6 auf der Zusteuerseite 25 des Ventilkolbens 42 eine genügend große Kraft generiert, die die Wirkung der Rastvorrichtung 26 überwindet und das Umschalt-Sitzventil 23 wieder zusteuert (wie in Fig. 3), so dass der Kolben 8 angehalten wird und bewegungslos verharrt. Wird hingegen die Pumpe 1 an einer gewählten Rückhubposition erneut eingeschaltet und eingeschaltet gelassen, kehrt der Kolben 8 seine Bewegungsrichtung um, nachdem das Umschalt-Sitzventil 23 zugesteuert wurde und wird ein neuer Arbeitszyklus eingeleitet.

Dank des Zusammenspiels zwischen der Druckanhebung in der Signalleitung 15 durch die Drosselanordnung 17 und der größeren Druckbeaufschlagungsfläche an der Aufsteuerseite 24 ist konstruktiv in den Hydraulikantrieb H Logik implementiert, die zu differenzieren vermag, ob ein in der Druckleitung 3 auftretender Volumenstromimpuls aus einem Nachlaufen der Pumpe nach Abschalten resultiert oder aus einem gewollten Einschalten der Pumpe, so dass sichergestellt ist, dass bei einem Nachlauf-Volumenstromimpuls das Umschalt-Sitzventil nicht unkontrolliert entweder in der zugesteuerten Stellung verharrt oder diese einnimmt.

In der weiteren Ausführungsform der Fig. 2 und 4, die funktionell der ersten Ausführungsform entspricht, wobei gleiche Teile mit gleichen Bezugszeichen hervorgehoben sind, wird die an der Zusteuerseite mit Ansprechen des Druckbegrenzungs-Sitzventils 18 und bei dessen Offenhalten vom Ventilkolben erzeugte Kraft mechanisch auf die Aufsteuerseite des Umschalt-Sitzventils 23 übertragen.

In Fig. 2 zweigt der Druckleitungszweig 4 zur Zuströmseite des Druckbegrenzungs-Sitzventils 18 von dem Druckleitungszweig 5 zur Zusteuerseite 25 des Umschalt-Sitzventils 23 ab. Die Tankleitung 16 ist hier mit der Drosselanordnung 17 (die auch im Druckbegrenzungs-Sitzventil 18 konstruktiv untergebracht sein könnte) von der Abströmseite direkt zum Tank 2 geführt. Das Umschalt-Sitzventil 23 weist an der Aufsteuerseite 24 eine kleinere Druckbeaufschlagungsfläche auf als an der Zusteuerseite 25 und wird dort über eine Steuerleitung 14a mit dem Druck aus der Tankleitung 14 beaufschlagt, so dass die in Fig. 1 und 3 gezeigte Rastvorrichtung 26 entfallen kann, jedoch nicht muss. Zwischen dem Druckbegrenzungs-Sitzventil 18 und dem Umschalt-Sitzventil 23 ist eine mechanische Kraftübertragung (in Fig. 2) vorgesehen, mit der bei Ansprechen und beim Offenhalten des Druckbegrenzungs-Sitzventils 18 die große Kraft des Ventilgliedes auf die Aufsteuerseite 24 des Umschalt-Sitzventils 23 übertragen wird.

Fig. 4 verdeutlicht eine konstruktive Lösung der Ausführungsform der Fig. 2, wobei das Druckbegrenzungs-Sitzventil 18 und das Umschalt-Sitzventil 23 in einem gemeinsamen Gehäuse 53 untergebracht sind, und beispielsweise eine Einschraubventilpatrone bilden, die in einer nicht gezeigten Gehäusebohrung verbaut ist. Im Gehäuse 53 ist eine Ringkammer 60 über die Leitung 12 mit der Arbeitskammer 8a verbunden. Der Druckleitungszweig 4 führt zur kleineren Beaufschlagungsfläche 20, während der Druckleitungszweig 5 an die Federkammer 37 angeschlossen ist, in der die Feder 29 über einen die Handnot-Betätigungshandhabe 39 aufweisenden Federteller 55 auf einen Schaft 59 des Ventilgliedes 33 einwirkt. Der Schaft 59 ist mit dem droßdurchmessrigen Kolben 34 verbunden, der in der Kammer 22a die größere Druckbeaufschlagungsfläche 22 hat und mit der Innenwand des Gehäuses 53 in der Kammer 22a die Drosselanordnung 17 bildet. Eine an der Rückseite des Kolbens 34 begrenzte Kammer 30 steht mit der Tankleitung 16, 14 in Verbindung, wie auch eine Kammer 59. Zwischen der Ringkammer 60 und der Kammer 59 ist im Gehäuse 53 ein Sitz 58 gebildet, mit welchem eine Sitzfläche 57 an der Außenseite eines als hohler Stufenkolben ausgebildeten Ventilkolbens 56 des Umschalt-Sitzventils 23 zusammenwirkt. Der Ventilkolben 56 bietet in der Kammer die Aufsteuerseite 24 an, die zumindest vom Druck in der Tankleitung in Aufsteuerrichtung beaufschlagbar ist. Ferner liegt die Zusteuerseite 24 in der gezeigten zugesteuerten Stellung der Rückseite des großdurchmessrigen Kolbens 34 gegenüber, um von diesem bei Ansprechen des Druckbegrenzungs-Sitzventils 18 axial verstellt zu werden, bis die Sitzfläche 57 vom Sitz 58 abgehoben hat und die mit der Arbeitskammer 8a verbundene Ringkammer 60 mit der Tankleitung 16, 14 verbunden ist. Im Ventilkolben 56 ist in wenigstens einem axialen Kanal 61 die Drossel 6 untergebracht, die zwischen der Federkammer 37, die an den Druckleitungszweig 5 angeschlossen ist, und der Ringkammer 60 wirkt.

### Funktion der Ausführungsform der Fig. 2 und 4:

In drucklosem Zustand nehmen die Komponenten die in Fig. 4 gezeigten Positionen ein. Der Kolben 8 ist beispielsweise vollständig zurückgefahren. Wird die Pumpe 1 eingeschaltete, baut sich in der Federkammer 37 Druck auf, der über die Drossel 6 und den Kanal 51, die Ringkammer 60 und die Leitung 12 auf den Kolben 8 übertragen wird. Der Kolben beginnt hochzufahren. Die Drossel 6 erzeugt eine Druckdifferenz, so dass auf der Zusteuerseite 25 des Ventilkolbens 56 eine nach rechts gerichtete Kraft generiert wird, die die Sitzfläche 57 am Sitz 58 hält bzw. den Ventilkolben 56, falls dieser noch weiter links stehen sollte als gezeigt, an den Sitz 58 anpresst. Sobald der maximale Arbeitsdruck erreicht ist, spricht das Druckbegrenzungs-Sitzventil 18 an, indem der Zapfenfortsatz 20 des Kolbens 34 aus der Bohrung gehoben wird, der maximale Arbeitsdruck auf der wesentlich größeren Druckbeaufschlagungsfläche 22 wirkt und den Kolben 34 zügig gegen die Feder 29 nach links verschiebt. Die Rückseite des Kolbens 34 schlägt an dem Ventilkolben 56 an und verstellt diesen gegen die schwächere Kraft auf der Zusteuerseite 25 nach links, so dass die Sitzfläche 57 vom Sitz 58 abgehoben wird und Druckmittel aus der Arbeitskammer 8a über die Leitung 12, die Ringkammer 60, am Sitz 58 vorbei in die Kammer 59 und aus dieser in die Tankleitung 16, 14 abströmt. Der maximale Arbeitsdruck auf der größeren Druckbeaufschlagungsfläche 22 baut sich nach Abschalten der Pumpe 1 auch über die Drosselanordnung 17 in die Kammer 30 und aus dieser über die Tankleitung 15 in die Tankleitung 16, 14 ab. Der Ventilkolben 56 ist aber bereits voll aufgesteuert und hält z.B. mit dem Tankdruck seine aufgesteuerte Stellung. In etwa mit dem Ansprechen des Druckbegrenzungs-Sitzventils 18 wurde die Pumpe 1 abgeschaltet, so dass sich der Druck in der Druckleitung 3 und in den Druckleitungszweigen 4, 5 abbaut. Nach wie vor wirkt aber der Druck in der Tankleitung 16, 14 an der Aufsteuerseite 24, während der Druck an der Zusteuerseite 25 verschwindet, so dass das Umschalt-Sitzventil 23 in der aufgesteuerten Stellung verharrt, während der Kolben 18 den Rückhub fortsetzt. Wird an einer gewählten Rückhubposition die Pumpe kurzzeitig eingeschaltet, dann erzeugt der damit entstehende Volumenstromimpuls über die Drossel 6 eine Kraft auf der Zusteuerseite 25, die den Ventilkolben 56 wieder in die in Fig. 4 gezeigte zugesteuerte Stellung überführt, so dass der Kolben 8 anhält. Wird die Pumpe 1 eingeschaltet und eingeschaltet gelassen, kehrt der Kolben 8 seine Bewegungsrichtung um und beginnt er einen neuen Arbeitszyklus.

Das Umschalt-Sitzventil 23 in Fig. 2 und 3 könnte ebenfalls mit einer mechanischen Verrastung 16 ausgestattet sein. Dann könnte gegebenenfalls die Beaufschlagung der Aufsteuerseite mit dem Tankdruck entfallen.

Das Druckbegrenzungs-Sitzventil 18 und das Umschalt-Sitzventil 23 in den Fig. 1 bis 4 bilden in den erläuterten Verschaltungen eine funktionssichere Ventilanordnung V, die für Hydraulikantriebe von Werkzeugen zweckmäßig ist, jedoch auch für andere Einsätze mit einem z.B. einseitig gegen eine Last beaufschlagbaren Hydroverbraucher brauchbar ist.

## Patentansprüche

1. Hydraulikantrieb (H) für ein einen einseitig gegen eine permanente Last (9, 10) von einer im Abschaltbetrieb betreibbaren Pumpe (1) über eine Ventilanordnung (V) mit einem Druckbegrenzungs-Sitzventil (18) und einem parallelen Umschalt-Sitzventil (23) beaufschlagbaren Kolben (8) in einer Arbeitskammer (8a) aufweisendes Werkzeug (W), wobei in einer Druckleitung (3) von der Pumpe (1) zur Arbeitskammer (8a) stromauf des Druckbegrenzungs-Sitzventils (18) eine Drossel (6) vorgesehen ist, das Druckbegrenzungs-Sitzventil (18) abströmseitig an einen Tank (2) angeschlossen ist, von der Arbeitskammer (8a) eine mit Druckleitung (3) stromab der Drossel (6) verbundene Ablassleitung (13) über das Umschalt-Sitzventil (23) zum Tank (2) führt, eine Zusteuerseite (25) des Umschalt-Sitzventils (23) aus der Druckleitung (3) stromauf der Drossel (6) druckbeaufschlagbar ist, eine Aufsteuerseite (24) des Umschalt-Sitzventils (23) mit einer bei Ansprechen des Druckbegrenzungs-Sitzventils (18) generierten Kraft beaufschlagbar ist, das Druckbegrenzungs-Sitzventil (18) an einem federbelasteten Ventilkolben (34) eine erste kleinere aus der Druckleitung (3) beaufschlagbare Druckbeaufschlagungsfläche (20) zum Begrenzen des maximalen Arbeitsdrucks in der Arbeitskammer (8a) und eine zweite, erheblich größere Druckbeaufschlagungsfläche (22) zum Offenhalten des Druckbegrenzungs-Sitzventils (18) nach dem Ansprechen zumindest bis zum Abschalten der Pumpe (1) aufweist, und die Pumpe (1) bei Erreichen des maximalen Arbeitsdrucks abschaltbar ist, **dadurch gekennzeichnet, dass** an der Abströmseite des Druckbegrenzungs-Sitzventils (18) zum Tank (2) eine Drosselanordnung (17) zum Anheben des auf der größeren Druckbeaufschlagungsfläche (22) des Druckbegrenzungs-Sitzventils (18) aus der Druckleitung (3) wirkenden Drucks vorgesehen ist, und dass die Kraft an der Aufsteuerseite (24) des Umschalt-Sitzventils (23) beim Ansprechen und im offengehaltenen Zustand des Druckbegrenzungs-Sitzventils (18) von dem Druckbegrenzungs-Sitzventil (18) aus dem angehobenen Druck entweder mechanisch oder hydraulisch generierbar ist.

2. Hydraulikantrieb nach Anspruch 1, **dadurch gekennzeichnet, dass** das Druckbegrenzungs-Sitzventil (18) ausschließlich auf den aus einem Volumenstrom in der Druckleitung (3) stromauf der Drossel (6) stammenden Druck anspricht.

3. Hydraulikantrieb nach Anspruch 1, **dadurch gekennzeichnet, dass** zum Abstoppen des Rückhubs des Kolbens (8) an wählbarer Rückhubposition das aufgesteuerte Umschalt-Sitzventil (23) durch einen Volumenstromimpuls in der Druckleitung (3) durch zeitlich begrenztes Einschalten der Pumpe (1) zusteuerbar ist.

4. Hydraulikantrieb nach Anspruch 1, **dadurch gekennzeichnet, dass** zum Umsteuern des Kolbens (8) beim Rückhub an wählbarer Rückhubposition die Pumpe (1) erneut einschaltbar ist.

5. Hydraulikantrieb nach Anspruch 1, **dadurch gekennzeichnet, dass** die Drosselanordnung (17) entweder von einer in einer von der Abströmseite des Druckbegrenzungs-Sitzventils (18) zum Tank (2) geführten Tankzweigleitung (16) angeordneten Drosselstelle und/oder von der Tankzweigleitung (16) selbst oder im Druckbegrenzungs-Sitzventil (18), vorzugsweise bei der größeren Druckbeaufschlagungsfläche (22) zwischen dem Ventilkolben (34) und einer Kammerwand, gebildet ist.

6. Hydraulikantrieb nach wenigstens einem der vorhergehenden Ansprüche, **dadurch gekennzeichnet, dass** zum hydraulischen Generieren der Kraft an der Aufsteuerseite (24) des Umschalt-Sitzventils (23) das Druckbegrenzungs-Sitzventil (18) und das Umschalt-Sitzventil (23) baulich voneinander getrennt, vorzugsweise, als Einschraubventile mit einem eigenen Gehäuse (36, 40), ausgebildet und hydraulisch über eine Signalleitung (15) verbunden sind, die sich von der Abströmseite des Druckbegrenzungs-Sitzventils (18) zur Aufsteuerseite (24) des Umschalt-Sitzventils (23) erstreckt, und dass die Drossel (6), vorzugsweise, im Gehäuse (40) des Umschalt-Sitzventils (23) in einem separaten Druckleitungszweig (41) angeordnet ist.

7. Hydraulikantrieb nach Anspruch 6, **dadurch gekennzeichnet, dass** das Umschalt-Sitzventil (23) eine mechanische Rastvorrichtung (26) aufweist und in der jeweiligen Schaltstellung mechanisch verrastbar ist.

8. Hydraulikantrieb nach wenigstens einem der vorhergehenden Ansprüche, **dadurch gekennzeichnet, dass** das Umschalt-Sitzventil (23) an der Aufsteuerseite (24) mit Tankdruck aus der Tankleitung (14) beaufschlagt ist.

9. Hydraulikantrieb nach wenigstens einem der vorhergehenden Ansprüche, **dadurch gekennzeichnet, dass** das Umschalt-Sitzventil (23) federfrei ausgelegt ist.

10. Hydraulikantrieb nach Anspruch 6, **dadurch gekennzeichnet, dass** das Umschalt-Sitzventil (23) in einem im Gehäuse (40) mit dem Tank (2) verbundenen Raum (52) einen mit einem im Gehäuse (40) verschiebbaren Ventilkolben (42) verbundenen Schließkegel (43) aufweist, der mit einem zur Arbeitskammer (8a) offenen Sitz (44) zusammenarbeitet, und dass der Ventilkolben (42) in einer an die Druckleitung (3) angeschlossenen Ringkammer des Gehäuses (40) als Zusteuerseite (25) eine kreisringförmige Druckbeaufschlagungsfläche (45) aufweist, die nur einem Bruchteil einer größeren, die Aufsteuerseite (24) definierenden Druckbeaufschlagungsfläche (46) des Ventilkolbens (42) in einer mit der Signalleitung (15) verbundenen Kammer (51) des Gehäuses (40) entspricht.

11. Hydraulikantrieb nach Anspruch 6 und 7, **dadurch gekennzeichnet, dass** die Verrastung (26) wenigstens eine radial einwärts nachgiebig, vorzugsweise durch einen O-Ring (49), belastete Kugel (47) in einer Radialbohrung (48) des Gehäuses (40) und den zugesteuerten auf aufgesteuerten Stellungen des Ventilkolbens (42) entsprechende Rastvertiefungen (50) im Umfang des Ventilkolbens (42), vorzugsweise angrenzend an die größere Druckbeaufschlagungsfläche (46) an der Aufsteuerseite (24), umfasst.

12. Hydraulikantrieb nach Anspruch 1, **dadurch gekennzeichnet, dass** zum mechanischen Generieren der Kraft an der Aufsteuerseite (24) des Umschalt-Sitzventils (23) das Umschalt-Sitzventil (23) und das Druckbegrenzungs-Sitzventil (18) mechanisch zusammenwirkend in einem gemeinsamen, über eine Leitung (12) an die Arbeitskammer (8a), zwei parallele Druckleitungszweige (4, 5) an die Pumpe (1) und eine Tankleitung (16, 14) an den Tank (2) angeschlossenen Gehäuse (53) angeordnet sind, und dass im Gehäuse (53) an einer der kleineren Druckbeaufschlagungsfläche (20) abgewandten, mit dem Tank (2) verbundenen Seite des die größere Druckbeaufschlagungsfläche (22) aufweisenden Ventilkolbens (34) des Druckbegrenzungs-Sitzventils (18) ein hohler, vorzugsweise die Drossel (6) enthaltender, Stufenkolben (56) mit außenseitiger Sitzfläche (57) verschiebbar geführt ist und mit der Sitzfläche (57) mit einem im Gehäuse (53) zwischen einem Tankanschluss und einem Druckleitungsanschluss sowie einem Anschluss der Leitung (12) zur Arbeitskammer (8a) geformten Sitz (58) zusammenwirkt.

13. Hydraulikantrieb nach Anspruch 12, **dadurch gekennzeichnet, dass** der zum Umschalt-Sitzventil (23) führende Druckleitungszweig (5) an eine dem Ventilkolben (34) des Druckbegrenzungs-Sitzventils (18) abgewandte Federkammer (37) des Druckbegrenzungs-Sitzventils (18) angeschlossen und mit einem den Stufenkolben (56) axial durchsetzenden, die Drossel (6) enthaltenden Kanal (61) verbunden ist.

## Claims

1. A hydraulic drive (H) for a tool (W) comprising in a working chamber (8a) a piston (8) which is adapted to be acted upon on one side thereof against a permanent load (9, 10) by a pump (1), which is operable in a switch-off mode, via a valve arrangement (V) including a pressure limiting seat valve (18) and a parallel switching seat valve (23), wherein a restriction (6) is provided in a pressure line (3) from the pump (1) to the working chamber (8a) upstream of the pressure limiting seat valve (18), the pressure limiting seat valve (18) is connected to a tank (2) on the downstream side, a drain line (13), which is connected to the pressure line (3) downstream of the restriction (6), leads from the working chamber (8a) via the switching seat valve (23) to the tank (2), a closing control side (25) of the switching seat valve (23) is adapted to have applied thereto pressure from the pressure line (3) upstream of the restriction (6), an opening control side (24) of the switching seat valve (23) is adapted to have applied thereto a force generated when the pressure limiting seat valve (18) responds, the pressure limiting seat valve (18) has on a spring-loaded valve piston (34) a first smaller pressure application surface (20), which is adapted to be acted upon by pressure from the pressure line (3) and used for limiting the maximum operating pressure in the working chamber (8a), and a second, much larger pressure application surface (22) for keeping the pressure limiting seat valve (18) open, after it has responded, at least until the pump (1) is switched off, and the pump (1) is adapted to be switched off when the maximum operating pressure has been reached, **characterized in that,** on the downstream side of the pressure limiting seat valve (18) to the tank (2), a restriction means (17) is provided for increasing the pressure from the pressure line (3) acting on the larger pressure application surface (22) of the pressure limiting seat valve (18), and that the force on the opening control side (24) of the switching seat valve (23) can be generated either mechanically or hydraulically by the pressure limiting seat valve (18) from the raised pressure, when the pressure limiting seat valve (18) responds and when it is kept open.

2. The hydraulic drive according to claim 1, **characterized in that** the pressure limiting seat valve (18) responds exclusively to the pressure originating from a volume flow in the pressure line (3) upstream of the restriction (6).

3. The hydraulic drive according to claim 1, **characterized in that,** for stopping the return stroke of the piston (8) at a selectable return stroke position, the open switching seat valve (23) is adapted to be closed by a volume flow pulse in the pressure line (3) by switching the pump (1) on for a limited period of time.

4. The hydraulic drive according to claim 1, **characterized in that,** for reversing the direction of movement of the piston (8) during the return stroke at a selectable return stroke position, the pump (1) can be switched on again.

5. The hydraulic drive according to claim 1, **characterized in that** the restriction means (17) is defined either by a restriction point arranged in a tank branch line (16) leading from the downstream side of the pressure limiting seat valve (18) to the tank (2) and/or by the tank branch line (16) itself, or is defined in the pressure limiting seat valve (18), preferably near the larger pressure application surface (22) between the valve piston (34) and a chamber wall.

6. The hydraulic drive according to at least one of the preceding claims, **characterized in that,** for hydraulically generating the force on the opening control side (24) of the switching seat valve (23), the pressure limiting seat valve (18) and the switching seat valve (23) are configured as structurally separate valves, preferably as screw-in valve cartridges having a housing (36, 40) of their own, and are hydraulically connected via a signal line (15) extending from the downstream side of the pressure limiting seat valve (18) to the opening control side (24) of the switching seat valve (23), and that the restriction (6) is, preferably, arranged in the housing (40) of the switching seat valve (23) in a separate pressure line branch (41).

7. The hydraulic drive according to claim 6, **characterized in that** the switching seat valve (23) includes a mechanical locking device (26) and is adapted to be mechanically locked at the respective switching position.

8. The hydraulic drive according to at least one of the preceding claims, **characterized in that** the switching seat valve (23) is acted upon by tank pressure from the tank line (14) on the opening control side (24).

9. The hydraulic drive according to at least one of the preceding claims, **characterized in that** the switching seat valve (23) is configured such that it does not comprise a spring.

10. The hydraulic drive according to claim 6, **characterized in that** the switching seat valve (23) comprises a closure cone (43) in a chamber (52) connected in the housing (40) to the tank (2), said closure cone (43) being connected to a valve piston (42), which is displaceable within the housing (40), the closure cone (43) cooperating with a seat (44) that is open towards the working chamber (8a), and that, in an annular chamber of the housing (40) connected to the pressure line (3), the valve piston (42) comprises as the closing control side (25) an annular pressure application surface (45) corresponding to only a fraction of a larger pressure application surface (46) of the valve piston (42) in a chamber (51) of the housing (40) connected to the signal line (15), said larger pressure application surface (46) defining the opening control side (24).

11. The hydraulic drive according to claims 6 and 7, **characterized in that** the mechanical locking device (26) comprises at least one ball (47), which is resiliently loaded radially inwards in a radial bore (48) of the housing (40), preferably by an O-ring (49), and locking recesses (50) in the circumference of the valve piston (42), which locking recesses (50) correspond to the closed and open positions of the valve piston (42), the locking recesses being located, preferably, adjacent to the larger pressure application surface (46) on the opening control side (24).

12. The hydraulic drive according to claim 1, **characterized in that,** for mechanically generating the force on the opening control side (24) of the switching seat valve (23), the switching seat valve (23) and the pressure limiting seat valve (18) are arranged in a mechanically cooperating manner in a common housing (53) connected via a line (12) to the working chamber (8a), via two parallel pressure line branches (4, 5) to the pump (1) and via a tank line (16, 14) to the tank (2), and that a hollow stepped piston (56), preferably containing the restriction (6), and, having an external seating area (57) is displaceably guided within the housing (53) on a side of the valve piston (34) of the pressure limiting seat valve (18) which is remote from the smaller pressure application surface (20) and which communicates with the tank (2), said valve piston (34) having the larger pressure application surface (22), and said seating area (57) of the hollow stepped piston (56) cooperating with a seat (58) formed in the housing (53) between a tank connection and a pressure line connection as well as a connection of the line (12) leading to the working chamber (8a).

13. The hydraulic drive according to claim 12, **characterized in that** the pressure line branch (5) leading to the switching seat valve (23) communicates with a spring chamber (37) of the pressure limiting seat valve (18) located remote from the valve piston (34) of the pressure limiting seat valve (18) and is connected to a passage (61) extending axially through the stepped piston (56) and containing the restriction (6).

## Revendications

1. Entraînement hydraulique (H) pour un outil (W) comprenant un piston (8) dans une chambre de travail (8a), pouvant être sollicité d'un côté, à l'encontre d'une charge permanente (9, 10), par une pompe (1) susceptible de fonctionner dans un mode par arrêt de marche, par l'intermédiaire d'un agencement de vannes (V) avec une vanne à siège de limitation de pression (18) et une vanne à siège d'inversion (23) en parallèle, entraînement hydraulique dans lequel
dans une conduite de pression (3) de la pompe (1) à la chambre de travail (8a), il est prévu en amont de la vanne à siège de limitation de pression (18), un étranglement (6),
la vanne à siège de limitation de pression (18) est raccordée, du côté de la sortie d'écoulement, à un réservoir (2),
de la chambre de travail (8a), une conduite de sortie d'écoulement (13) reliée à la conduite de pression (3) en aval de l'étranglement(6), mène au réservoir (2) par l'intermédiaire de la vanne à siège d'inversion (23),
un côté de commande de fermeture (25) de la vanne à siège d'inversion (23) peut être alimenté en pression à partir de la conduite de pression (3), en amont de l'étranglement (6),
un côté de commande d'ouverture (24) de la vanne à siège d'inversion (23) peut être sollicité par une force générée lors d'un déclenchement de la vanne à siège de limitation de pression (18),
la vanne à siège de limitation de pression (18) présente sur un piston de vanne (34) chargé par ressort, une première surface active de pression (20) plus petite, pouvant être sollicitée à partir de la conduite de pression (3), pour imiter la pression de travail maximale dans la chambre de travail (8a), et une deuxième surface active de pression (22) considérablement plus grande pour maintenir ouverte la vanne à siège de limitation de pression (18) après le déclenchement au moins jusqu'à l'arrêt de la pompe (1), et la pompe (1) pouvant être arrêtée lorsque la pression de travail maximale est atteinte,
**caractérisé en ce que** sur le côté de sortie d'écoulement de la vanne à siège de limitation de pression (18) vers le réservoir (2), il est prévu un agencement d'étranglement (17) pour augmenter la pression agissant à partir de la conduite de pression (3) sur la surface active de pression (22) la plus grande de la vanne à siège de limitation de pression (18), et **en ce que** la force sur le côté de commande d'ouverture (24) de la vanne à siège d'inversion (23), lors du déclenchement et dans l'état maintenu ouvert de la vanne à siège de limitation de pression (18), peut être générée par voie mécanique ou hydraulique par la vanne à siège de limitation de pression (18), à partir de la pression augmentée.

2. Entraînement hydraulique selon la revendication 1, **caractérisé en ce que** la vanne à siège de limitation de pression (18) déclenche exclusivement en réponse à la pression provenant d'un débit volumique dans la conduite de pression (3) en amont de l'étranglement (6).

3. Entraînement hydraulique selon la revendication 1, **caractérisé en ce que** pour stopper la course de retour du piston (8) à une position de course de retour pouvant être choisie, la vanne à siège d'inversion (23) ayant été commandée en ouverture, peut être commandée en fermeture par une impulsion de débit volumique dans la conduite de pression (3) par une mise en marche limitée dans le temps de la pompe (1).

4. Entraînement hydraulique selon la revendication 1, **caractérisé en ce que** pour la commande de l'inversion du piston (8) lors de la course de retour, la pompe (1) peut à nouveau être mise en marche, dans une position de course de retour pouvant être choisie.

5. Entraînement hydraulique selon la revendication 1, **caractérisé en ce que** l'agencement d'étranglement (17) est formé par une zone d'étranglement agencée dans une conduite de dérivation de réservoir (16) menant du côté de sortie d'écoulement de la vanne à siège de limitation de pression (18) au réservoir (2), et/ou par la conduite de dérivation de réservoir (16) elle-même, ou dans la vanne à siège de limitation de pression (18), de préférence au niveau de la plus grande surface active de pression (22), entre le piston de vanne (34) et une paroi de chambre.

6. Entraînement hydraulique selon l'une au moins des revendications précédentes, **caractérisé en ce que** pour générer hydrauliquement la force sur le côté de commande d'ouverture (24) de la vanne à siège d'inversion (23), la vanne à siège de limitation de pression (18) et la vanne à siège d'inversion (23) sont mutuellement séparées sur le plan de la construction, sont de préférence réalisées en tant que vannes à visser avec leur propre boitier ou corps (36, 40), et sont reliées hydrauliquement par une conduite de signal (15), qui s'étend du côté de sortie d'écoulement de la vanne à siège de limitation de pression (18) au côté de commande d'ouverture (24) de la vanne à siège d'inversion (23), et **en ce que** l'étranglement (6) est, de préférence, agencé dans le boitier ou corps (40) de la vanne à siège d'inversion (23), dans une branche de conduite de pression (41) séparée.

7. Entraînement hydraulique selon la revendication 6, **caractérisé en ce que** la vanne à siège d'inversion (23) comporte un dispositif d'encliquetage mécanique (26) et peut être encliquetée mécaniquement dans la position de commutation respective.

8. Entraînement hydraulique selon l'une au moins des revendications précédentes, **caractérisé en ce que** la vanne à siège d'inversion (23) est sollicitée, du côté de commande d'ouverture (24), par la pression du réservoir à partir de la conduite de réservoir (14).

9. Entraînement hydraulique selon l'une au moins des revendications précédentes, **caractérisé en ce que** la vanne à siège d'inversion (23) est d'une exécution sans ressort.

10. Entraînement hydraulique selon la revendication 6, **caractérisé en ce que** la vanne à siège d'inversion (23) présente, dans une chambre (52) reliée au réservoir (2) dans le corps (40), un cône de fermeture (43), qui est relié à un piston de vanne (42) pouvant coulisser dans le corps (40), et qui coopère avec un siège (44) ouvert vers la chambre de travail (8a), et **en ce que** le piston de vanne (42) présente, dans une chambre annulaire du corps (40) raccordée à la conduite de pression (3), en guise de côté de commande de fermeture (25), une surface active de pression (45) de forme annulaire, qui ne correspond qu'à une fraction d'une surface active de pression (46) plus grande du piston de vanne (42), qui définit le côté de commande d'ouverture (24), dans une chambre (51) du corps (40), reliée à la conduite de signal (15).

11. Entraînement hydraulique selon les revendications 6 et 7, **caractérisé en ce que** l'encliquetage (26) comprend au moins une bille (47) sollicitée radialement vers l'intérieur de manière élastique, de préférence par un joint torique (49), dans un alésage radial (48) du corps (40), et des creux d'encliquetage (50) associés aux positions de fermeture commandée et d'ouverture commandée du piston de vanne (42), dans la périphérie du piston de vanne (42), de préférence au voisinage de la plus grande surface active de pression (46) sur le côté de commande d'ouverture (24).

12. Entraînement hydraulique selon la revendication 1, **caractérisé en ce que** pour générer mécaniquement ladite force au niveau du côté de commande d'ouverture (24) de la vanne à siège d'inversion (23), la vanne à siège d'inversion (23) et la vanne à siège de limitation de pression (18) sont agencées de manière à coopérer mécaniquement dans un boitier ou corps (53) commun, qui est raccordé à la chambre de travail (8a) par l'intermédiaire d'une conduite (12), à la pompe (1) par l'intermédiaire de deux branches de conduite de pression (4, 5) parallèles, et au réservoir (2) par l'intermédiaire d'une conduite de réservoir (16, 14), et **en ce que** dans le corps (53), sur un côté du piston de vanne (34) de la vanne à siège de limitation de pression (18), comportant la plus grande surface active de pression (22), opposé à la plus petite surface active de pression (20) et relié au réservoir (2), est guidé de manière coulissante un piston étagé (56) creux, qui renferme de préférence l'étranglement (6) et comporte une surface de siège extérieure (57), et qui, avec la surface de siège (57), coopère avec un siège (58) formé dans le corps (53) entre un raccord de réservoir et un raccord de conduite de pression ainsi qu'un raccord de la conduite (12) vers la chambre de travail (8a).

13. Entraînement hydraulique selon la revendication 12, **caractérisé en ce que** la branche de conduite de pression (5) menant à la vanne à siège d'inversion (23) est raccordée à une chambre de ressort (37) de la vanne à siège de limitation de pression (18), à l'opposé du piston de vanne (34) de la vanne à siège de limitation de pression (18), et est reliée à un canal (61) traversant axialement le piston étagé (56) et renfermant l'étranglement (6).
